# EUROPÄISCHE PATENTANMELDUNG

(11) **EP 0 726 637 A2**
(43) Veröffentlichungstag der Anmeldung: **14.08.1996**
(21) Anmeldenummer: 96810045.3
(22) Anmeldetag: 23.01.1996
(51) Int. Cl.: H02K 15/02, H02K 1/28

(54) **Elektrische Maschine mit Stegwelle**

(30) Priorität: 11.02.1995 DE 19504531
(71) Anmelder: ABB Management AG, CH-5401 Baden (CH)
(72) Erfinder: Prenner, Herbert, Dr., CH-5413 Birmenstorf (CH)

(57) **Zusammenfassung**

Bei einer elektrische Maschine mit einem Rotorblechkörper (2) ist der Rotorblechkörper (2) auf einer Stegwelle oder Rotorstern (3) befestigt. Um die sonst üblichen Keilverbindungen zwischen Rotorblechkörper und Stegwelle zu vermeiden, ist der Rotorblechkörper (2) auf die Stegwelle bzw. den Rotorstern (3) ohne Verwendung von Keilen aufgeschrumpft.

Die Nuten (9) liegen dabei ausserhalb der Schrumpfflächen (8) zwischen zwei benachbarten Armen bzw. Stegen (5) und sind vorzugsweise in einem azimutalen Abstand (a) von 10 bis 25% des Abstandes (b) zwischen zwei benachbarten Stegen/Arme (5) angeordnet.

## Beschreibung

### TECHNISCHES GEBIET

Die Erfindung bezieht sich auf eine elektrische Maschine mit einem Rotorblechkörper, der auf einer Stegwelle oder Rotorstern befestigt ist.

Die Erfindung nimmt dabei Bezug auf einen Stand der Technik, wie es sich beispielsweise aus dem Buch Wiedemann/Kellenberger "Konstruktion elektrischer Maschinen", Springer-Verlag Berlin, Heidelberg,New York 1967, S.269 - 271, Insbesondere Abb.184 auf Seite 269, bekannt ist.

### TECHNOLOGISCHER HINTERGRUND UND STAND DER TECHNIK

Der Rotorblechkörper in Wechselstrom- und Gleichstrommaschinen hat sich selbst und die Rotorwicklung gegen Fliehkraft zu tragen, den magnetischen Fluss zu leiten und das Drehmoment in der Nutenzone auf die Welle zu übertragen.

Bei elektrischen Maschinen mit Rotordurchmessern bis etwa 600 mm werden normalerweise die Rotorbleche direkt auf einer glatten Rotorwelle befestigt. Und zwar wird entweder der komplett geschichtete und eventuell bewickelte Rotor aufgepresst, oder die einzelnen Bleche werden aufgeschichtet oder paketweise aufgeschrumpft. Die Drehmomentübertragung erfolgt hier also mittels Reibschluss.

Bei grösseren Maschinen erfolgt die Drehmomentübertragung meist über Keile, insbesondere Rundkeile. Diese Keile werden in ausgeriebene Nuten - halb in den Rotorstern bzw. Stegwelle und halb in den Blechkörper eingepresst (vg. a.a.O. Abb. 184 auf Seite 269.

Der Pressitz soll bei raschlaufenden Maschinen so gross sein, dass bei Schleuderdrehzahl und warmen Blechkörper noch kein Abheben an der Stegwelle bzw. dem Rotorstern erfolgt. In diesem Fall ist für die Beanspruchung der Bleche die Schrumpfspannung in der Bohrung bei Stillstand und kaltem Rotor massgebend. Die Herstellung der Nuten und die anschliessende Verkeilung erfordert grösste Sorgfalt und ist deshalb mit aufwendigen Arbeitsschritten verbunden.

Die Verwendung von Keilen birgt darüber hinaus die Gefahr in sich, dass die zur Aufnahme der Keilhälften erforderlichen Nuten am Innenumfang des Rotorblechkörpers den Blechkörper in unzulässiger Weise schwächen und bei hochbelasteten Maschinen deshalb vermieden werden sollten.

### KURZE DARSTELLUNG DER ERFINDUNG

Der Erfindung liegt die Aufgabe zugrunde, eine elektrische Maschine der eingang genannten Gattung zu schaffen, die einfach und wirtschaftlich herzustellen ist, und bei der insbesondere die Verbindung des Rotorblechkörpers mit der Welle allen Betriebsbeanspruchungen standhält.

Diese Aufgabe wird erfindungsgemäss dadurch gelöst, dass der Rotorblechkörper auf die Stegwelle bzw. den Rotorstern ohne Verwendung von Keilen aufgeschrumpft ist.

Der Vorteil der Erfindung ist insbesondere darin zu sehen, dass keine aufwendige Bearbeitung der Keilnuten erforderlich ist und auch die eingangs beschriebene Schwächung des Rotorblechkörpers vermieden ist.

Um nun einunddieselben Stanzwerkzeuge wie für Rotorbleche mit Keilverbindung verwenden zu können, also Bleche mit Nuten am Innenumfang verwenden zu können, und trotz allem Schrumpfen zu können, werden die Nuten relativ zu den Schrumpfflächen an den Enden der Stegwelle bzw. des Rotorsterns derart angeordnet, dass die Nuten jeweils zwischen zwei benachbarten Stegen bzw. Armen zu liegen kommen. Ueberraschenderweise hat sich dabei gezeigt, dass die Beanspruchung des Blechkörpers (durch die Nuten) minimal wird, wenn diese nicht, wie an sich zu erwarten wäre - in der Mitte zwischen zwei benachbarten Stegen/Armen zu liegen kommen, sondern in einem azimutalen Abstand von 10 bis 25% des Abstandes zwischen zwei benachbarten Stegen/Armen zu liegen kommen.

Auf diese Weise lassen sich insbesondere auch bei Retrofit-Vorhaben Rotoren mit Keilverbindungen zwischen Blechkörper und Stegwelle auf Schrumpftechnik umrüsten.

Ausführungsbeispiele der Erfindung sowie die damit erzielbaren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: ein erstes Ausführungsbeispiel der Erfindung, mit einem Querschnitt durch einen Teil des Rotors einer Wechselstrommaschine, dessen Blechkörper auf eine Stegwelle aufgeschrumpft ist;
- Fig.2: ein Ausführungsform der Erfindung mit einem Blechkörper, dessen Bleche mit Nuten am Innenumfang versehen sind.

### WEGE ZUR AUSFÜHRUNG DER ERFINDUNG

In Fig.l ist ein aus einteiligen Blechen 1 aufgebauter Blechkörper 2 auf einer Stegwelle 3 befestigt. Die Stegwelle 3 umfasst eine Nabe 4 mit radial nach aussen weisenden Armen bzw. Stegen 5, die gleichmässig über ihren Umfang verteilt sind. Der Blechkörper 2 weist an seinem Aussenumfang Nuten 6 zur Aufnahme der (nicht dargestellten Rotorwicklung) auf.

Die kraftschlüssige Verbindung zwischen dem Rotorblechkörper 2 und der Stegwelle 3 erfolgt durch einen an sich bekannten Schrumpfprozess. Zu diesem Zweck wird der Rotorblechkörper 2 auf eine vorbestimmte Temperatur z.B. induktiv erwärmt, und die (kalte) Stegwelle 3 in die Bohrung des Rotorblechkörpers 2 eingefahren. Beim Abkühlen des Rotorblechkörpers 2 wird dieser auf die Aussenflächen der Arme 5 gepresst, und auf diese Weise die kraftschlüssige Verbindung zwischen Rotorblechkörper 2 und Stegwelle 3 hergestellt. Eine optimale Verbindung ohne übermässige Beanspruchung der Bleche bzw. des Blechkörpers einerseits und Grösse der Kühlkanäle 7 zwischen den einzelnen Stegen 5, der Nabe 4 und dem Rotorblechkörper 2 ergibt sich, wenn die Auflageflächen 8 in Umfangsrichtung gesehen zwischen 10 und 20 % des gesamten Innenumfangs des Rotorblechkörpers 2 betragen.

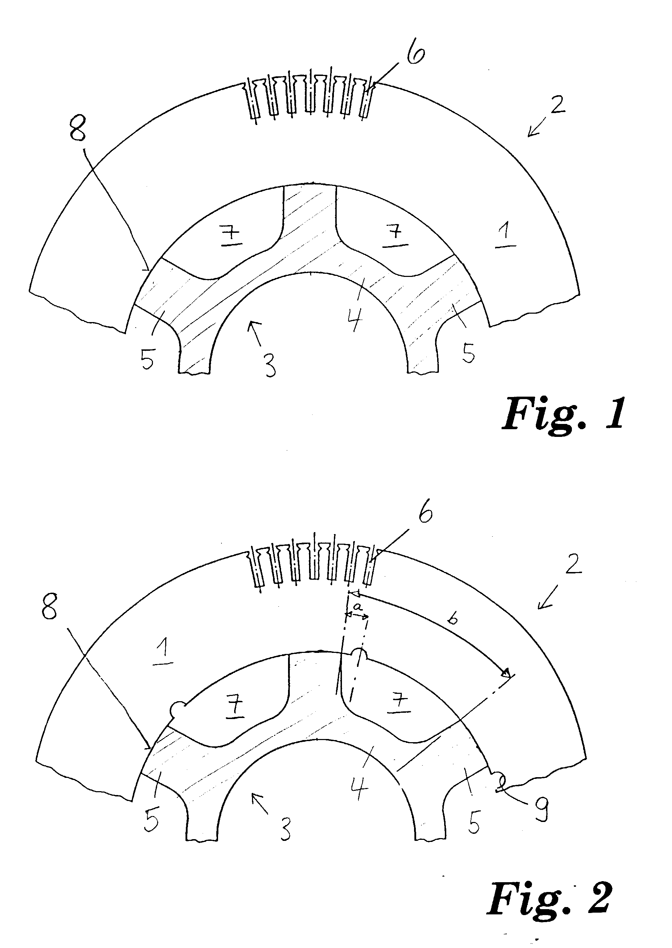

Bleche für den Rotorblechkörper wie auch für den Statorblechkörper werden normalerweise gestanzt. Um nun für geschrumpfte Rotor/Stegwellen-Verbindungen und solche mit Verkeilung die selben Stanzwerkzeuge und damit dieselben Bleche verwenden zu können, muss dafür Sorge getragen werden, dass die Keilnut 9 am Innenumfang den Kraftschluss zwischen Rotorblechkörper 2 und Stegwelle 3 nicht übermässig schwächt. Aus diesem Grunde kommt eine Anordnung nicht in Frage, bei welcher die Nut 9 innerhalb der Schrumpffläche 8 zu liegen kommt. Aus diesem Grunde sind die Nuten 9 so zu legen, dass sie zwischen den Armen bzw. Stegen 5 der Stegwelle 3 zu liegen kommen. Ueberraschenderweise hat sich dabei gezeigt, dass die Beanspruchung des Blechkörpers (durch das Vorhandensein von Nuten 9) beim Schrumpfen und auch im späteren Betrieb der Maschine minimal wird, wenn diese Nuten 9 sich nicht, wie an sich zu erwarten wäre - in der Mitte zwischen zwei benachbarten Stegen/Armen 5 befinden, sondern in einem azimutalen Abstand a von 10 bis 25% des Abstandes b zwischen zwei benachbarten Stegen/Armen. Dies ist in Fig.2 beispielsweise veranschaulicht.

### BEZEICHNUNGSLISTE

- 1: Rotorbleche
- 2: Rotorblechkörper
- 3: Stegwelle
- 4: Nabe von 3
- 5: Arme von 3
- 6: Nuten am Aussenumfang von 2
- 7: axiale Kühlkanäle zwischen 2 und 4
- 8: Auflageflächen von 5
- 9: Halbrundnuten in 2

- a: azimutaler Abstand von 9 und 5
- b: azimutaler Abstand zwischen zwei Armen 5

## Patentansprüche

1. Elektrische Maschine mit einem Rotorblechkörper (2), der auf einer Stegwelle oder Rotorstern (3) befestigt ist, dadurch gekennzeichnet, dass der Rotorblechkörper (2) auf die Stegwelle bzw. den Rotorstern (3) ohne Verwendung von Keilen aufgeschrumpft ist.

2. Elektrische Maschine nach Anspruch 1, dadurch gekennzeichnet, dass bei einem mit Nuten (9) am Innenumfang versehenen Rotorblechkörper (2) die Nuten (9) ausserhalb der Schrumpfflächen (8) zwischen zwei benachbarten Armen bzw. Stegen (5) angeordnet sind.

3. Elektrische Maschine nach Anspruch 2, dadurch gekennzeichnet, dass die Nuten (9) in einem azimutalen Abstand (a) von 10 bis 25% des Abstandes (b) zwischen zwei benachbarten Stegen/Armen (5) angeordnet sind.
